# EUROPÄISCHE PATENTSCHRIFT

(11) **EP 3 803 725 B1**
(45) Veröffentlichungstag und Bekanntmachung des Hinweises auf die Patenterteilung: **12.11.2025**
(21) Anmeldenummer: 19726674.5
(22) Anmeldetag: 24.05.2019
(51) Int. Cl.: G06Q 10/04, G06Q 10/08

(54) **MODULAR AUFGEBAUTES FÖRDERSYSTEM MIT DYNAMISCH VERÄNDERBAREN MODULFÖRDERGESCHWINDIGKEITEN**
MODULARLY CONSTRUCTED CONVEYOR SYSTEM WITH DYNAMICALLY CHANGEABLE MODULE CONVEYING SPEEDS
SYSTÈME DE CONVOYEUR À CONSTRUCTION MODULAIRE AVEC DES VITESSES DE TRANSPORT DE MODULE À CHANGEMENT DYNAMIQUE

(30) Priorität: 24.05.2018 DE 102018112524
(43) Veröffentlichungstag der Anmeldung: 14.04.2021
(73) Patentinhaber: SSI Schäfer Automation GmbH (DE), 97232 Giebelstadt (DE)
(72) Erfinder: BLEIFUSS, Ralf, 97291 Thüngersheim (DE)
(74) Vertreter: Witte, Weller & Partner Patentanwälte mbB
(86) Internationale Anmeldenummer: PCT/EP2019/063462
(87) Internationale Veröffentlichungsnummer: WO 2019/224352

(56) Entgegenhaltungen:
- WO-A1-2011/091880
- DE-A1- 102005 027 687
- DE-A1- 102009 031 137
- DE-A1- 102014 221 325

## Beschreibung

Die vorliegende Erfindung betrifft ein Fördersystem mit einem Fördernetz und einer Steuerung. Ferner betrifft die Erfindung ein Verfahren zum Transportieren von Fördergütern in einer durchsatzoptimierten Weise.

Eine Durchsatzoptimierung drückt sich allgemein dadurch aus, dass möglichst viele Fördergüter über möglichst wenig Förderstrecken in einer möglichst kurzen Zeit durch ein Fördernetz transportiert werden.

Das Dokument DE 10 2014 221 325 A1 offenbart ein Logistiksystem.

Das Dokument FR 2 991 976 A1 offenbart ein Fördersystem zum Bewegen von Lasten, das Förderelemente aufweist, die mit einem Computersystem verbunden sind, um höhere Informationen und Anfragerückgabe-Informationen bereitzustellen, wobei die höheren Informationen Leit- und Anfrageinformationen umfassen.

Das Dokument DE 10 2010 006 093 A1 offenbart ein Verfahren zum Aufbau oder zur Aktualisierung von Routingtabellen für ein modulares Fördersystem sowie ein modulares Fördersystem.

Die Dokumente DE 10 2009 031 137 A1 und DE 10 2005 027 687 A1 offenbaren jeweils ein System zur dezentralen Materialflusssteuerung.

Generell dienen Fördersysteme zur Überwindung von Entfernungen. Förder- bzw. Transportsysteme befördern Transport- bzw. Fördergüter von Eingangsstationen (Quellen eines Logistiknetzwerks) zu Ausgangsstationen (Senken des Logistiknetzwerks). Das Transport- bzw. Fördergut kann Massengut oder Stückgut sein. Die Erfindung betrifft insbesondere den Transport von Stückgütern (Waren, Artikel, Gebinde, etc.). Die Stückgüter können mit oder ohne Ladehilfsmittel (z.B. Behälter, Tablar, Palette, Hängefördertasche) transportiert werden.

Aus einer allgemeinen Logistikaufgabe (das richtige Fördergut muss zum richtigen Zeitpunkt am richtigen Ort sein) resultiert für Planer, Hersteller und Betreiber von Transport- und Fördersystemen die folgende Transportaufgabe: "Ein Transportsystem ist so zu gestalten, zu dimensionieren, zu organisieren und zu disponieren, dass ein bestimmter Beförderungsbedarf unter Berücksichtigung von räumlichen, zeitlichen und technischen Randbedingungen optimal erbracht wird."

Das Gestalten umfasst eine Auswahl technisch geeigneter Transportmittel sowie das Zusammenfügen der Transportmittel zu einem Transport- bzw. Fördernetz. Das Dimensionieren erfolgt durch Festlegen von Lagen und Längen der Transportwege (d.h. eines oder mehrerer zusammengehöriger Transportmittel) sowie von Leistungskennzahlen der Transportmittel. Das Organisieren bedeutet Konzeptionieren und Aufbauen einer Transportsteuerung. Das Disponieren regelt den Einsatz der Transportmittel nach geeigneten Transportstrategien.

Räumliche Randbedingungen sind die Standorte bzw. Positionen der miteinander zu verbindenden Eingangs-, Zwischen- und Ausgangsstationen. Zeitliche Randbedingungen sind z.B. vorgeschriebene Abholzeiten, geforderte Ankunftszeiten oder maximal zulässige Transportzeiten. Technische Randbedingungen ergeben sich aus der Beschaffenheit des Transportguts (z.B. Gewicht, Größe, Zerbrechlichkeit, etc.), aus der Belastbarkeit der Transportmittel (z.B. minimaler Fördergutabstand bzw. kleinstmögliche Teilung, maximale Streckenlast, maximale Einzellast, maximale Fördergeschwindigkeit, etc.) und aus einem Durchsatzvermögen der Transportstrecken und Transportknoten (Stationen), siehe "Logistik" von Timm Gudehus (ISDN 3-540-65206), Springer Verlag, 1. Auflage, 1999, Kapitel 18, S. 663 ff.

Bisher wurden Förderstrecken eines gewöhnlichen Fördernetzes für eine größtmögliche Belastung ausgelegt (Auswahl der Bauteile wie z.B. Antrieb, Fördermittel, etc.) und parametriert (z.B. Fördergeschwindigkeit). Dies soll anhand des nachfolgenden Beispiels erläutert werden.

Die (modularen) Förderstrecken eines gewöhnlichen Fördernetzes können mit zwei Geschwindigkeiten (z.B. 0,566 m/s und 0,278 m/s) betrieben werden. Bei der Geschwindigkeit von 0,566 m/s können die Förderstrecken mit einer maximalen Streckenlast von z.B. 10 kg/m bei einer maximalen Einzellast der Fördergüter von 4,5 kg betrieben werden. Bei der Geschwindigkeit von 0,278 m/s können die Förderstrecken mit einer maximalen Streckenlast von z.B. 25 kg/m bei einer maximalen Einzellast von 12,5 kg betrieben werden. Wenn nun eine größte Einzellast eines Förderguts aus einem Spektrum verschiedener Fördergüter, die irgendwann einmal zu transportieren sind, 12,5 kg beträgt, wird das gesamte Fördernetz, d.h. jeder der Förderstrecken, mit maximal einer Geschwindigkeit von 0,278 m/s betrieben. Da außerdem die maximal zulässige Streckenlast 25 kg/m beträgt, werden die Fördergüter mit einem minimalen Fördergutabstand, also einer kleinstmöglichen Teilung T, von 0,5m transportiert. Bei dieser Parametrierung der Förderstrecken kann das Fördernetz immer sicher betrieben werden. Der Durchsatz ist dann aber auf 2.000 Fördergüter beschränkt (Geschwindigkeit x 1h/ T = 0,278 x 3600/0,5 = 2.000). Wenn zusätzlich die Forderung gestellt wird, in 10 Stunden 380.000 Fördergüter zu transportieren, müssen 19 zueinander parallele Förderstrecken-Module vorgesehen werden.

Es ist aber wünschenswert, weniger Förderstreckenmodule bei gleichem Durchsatz einzusetzen. Alternativ ist es wünschenswert, bei gleicher Anzahl von Förderstreckenmodulen einen höheren Durchsatz zu erzielen. Außerdem ist es wünschenswert, ein Fördernetz so auszulegen, dass es mit möglichst wenig existierenden Förderstrecken auch zukünftig prognostizierte, höhere Durchsätze bewältigen kann.

Es ist daher eine Aufgabe der vorliegenden Erfindung ein verbessertes Fördersystem und ein besseres Verfahren zum Transportieren einer Vielzahl von Fördergütern vorzusehen.

Diese Aufgabe wird gelöst durch ein Fördersystem gemäß Anspruch 1 gelöst.

Ein Vorteil der Erfindung ist in der Flexibilisierung zu sehen. Betreiber derartiger Systeme können durchsatzoptimiert arbeiten. Es werden wenige Förderstrecken benötigt, um hohe Durchsätze zu erzielen. Alternativ können einige Förderstrecken deaktiviert sein, was sich in einem geringeren Verschleiß und geringeren Wartungskosten äußert. Der Betreiber kann kurzfristig auf sich ändernde Auftragsstrukturen reagieren.

Weitere Vorteile des Systems sind: minimierte Kapitalkosten bei Erhaltung der Flexibilität (Langzeiteffekte durch Einsparung von zusätzlichen Förderstrecken, insbesondere logistischer Funktion); minimierte laufende Kosten (Wartung, Inspektion, Energieverbrauch); Einsatz einer homogene Technik, d.h. keine spezifischen Komponenten mit gedoppelten Ersatzteilpaketen; Erweiterbarkeit; weitere Flexibilisierung durch Einführung weiteren Förderkriterien; höhere Leistung als im bisher bekannten, starren Betriebsmodus mit (einmal) fest eingestellten Geschwindigkeiten möglich; kürzere tägliche Betriebszeiten im Normalbetrieb; hohe Investitionssicherheit durch Anpassung auf sich ständig ändernde Anforderungen (unvorhersehbares Bestellverhalten der Kunden, Marktentwicklungen, Peaks durch Sonderangebote, etc.); smarte Steuerung durch den Materialflussrechner, der den aktiven (Transport-) Auftragspool verwaltet und für die Regelung der Förderstrecken verantwortlich ist; und/oder eine erhöhte Ausfallsicherheit (Redundanz), weil jede Förderstrecke die Aufgabe(n) des ausgefallenen übernehmen kann.

Vorzugsweise wird ferner für jedes der Fördergüter einer der Transportwege basierend auf den Förderkriterien durch die Steuerung so ausgewählt, dass der Durchsatz der Fördergüter durch das Fördernetz während des Zeitfensters optimiert ist.

Die Fördergüter können individuell durch das Fördernetz geleitet werden, insbesondere durchsatzoptimiert. Jedes Fördergut kann einen anderen Weg durch das Netz beschreiten. Jedem Fördergut stehen mehrere Möglichkeiten offen, so dass insgesamt eine hohe Flexibilität für die Planung aller Transportaufträge vorliegt.

Insbesondere sind die Auswahl der Betriebsmodi für die Transportwege einerseits und die Auswahl der Transportwege für die Transportaufträge andererseits voneinander abhängig und erfolgen durchsatzoptimiert.

Bei einer weiteren vorteilhaften Ausgestaltung weist jeder der Transportwege eine oder mehrere miteinander verbundene Förderstrecken auf, die die jeweilige Eingangsstation mit der zugehörigen Ausgangsstation verbinden.

Hier kommt zum Ausdruck, dass beliebig viele Transportwege kreiert werden können, wodurch sich der Optimierungsprozess einfacher umsetzen lässt.

Insbesondere ist jeder der Transportaufträge definiert durch: das Förderkriterium, das dem jeweils zugeordneten Fördergut zugeordnet ist; das Zeitfenster; einen örtlichen Startpunkt, der insbesondere einer der Eingangsstationen entspricht; einen örtlichen Ankunftspunkt, der insbesondere einer der Ausgangsstationen entspricht; eine der Betriebsmodus-Phasen, während der ein Transport des jeweils zugeordneten Förderguts am Startpunkt beginnt und am Ankunftspunkt endet; und einen der Transportwege, der den Startpunkt mit dem Ankunftspunkt verbindet.

Vorzugsweise umfasst der eine Transportweg nur Förderstrecken, deren Betriebsmodi während der zugehörigen Betriebsmodus-Phase dem gleichen Förderkriterium wie der jeweilige Transportauftrag zugeordnet sind.

Das zugeordnete Förderkriterium ist ausschlaggebend für die Wahl der Transportwege und die Geschwindigkeiten, mit denen die Transportwege bzw. die entsprechenden Förderstrecken betrieben werden.

Auch ist es von Vorteil, wenn das Fördernetz eine Vielzahl von Eingangsstationen aufweist und/oder eine Vielzahl von Ausgangsstationen aufweist, wobei jede der Eingangsstationen mit wenigstens einer Ausgangsstation über mehrere der Transportwege verbindbar ist.

In der Regel weist ein System mehrere Quellen und Senken auf. Das erhöht die Komplexität des Systems. Dennoch ist die Durchsatzoptimierung möglich.

Des Weiteren ist es bevorzugt, wenn die Steuerung den Durchsatz optimiert, indem die Steuerung, vorzugsweise eine Verteilung der Förderkriterien über alle Transportaufträge, die zeitlich innerhalb des Zeitfenster liegen, bestimmt, um dann die Betriebsmodi für jeden der Transportwege basierend auf der Verteilung auszuwählen.

Vorzugsweise ist ein weiterer Förderkriterium-unabhängiger Betriebsmodus vorgesehen, der eine Transportweg-Geschwindigkeit von Null aufweist, so dass sich der entsprechende Transportweg in einem Ruhezustand befindet.

Werden einige Förderstrecken nicht benötigt, um den angestrebten Durchsatz zu erzielen, können sie ausgeschaltet werden. Dadurch verringert sich ein Verschleiß. Wartungen sind wenig häufig erforderlich. Kosten können gespart werden.

Insbesondere berücksichtigt die Steuerung beim Optimieren eine förderstreckenspezifische, maximale Belastbarkeit in Form eines minimalen Fördergutabstands.

Ferner wird die Aufgabe durch ein Verfahren gemäß Anspruch 11 gelöst.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockdiagramm eines Fördersystems;
- Fig. 2: eine Veranschaulichung eines exemplarischen Fördernetzes;
- Fig. 3: eine schematische Veranschaulichung eines komplexeren Fördernetzes;
- Fig. 4: eine Veranschaulichung einer exemplarischen Zuordnung von Transportweg- bzw. Förderstrecken-Betriebsmodi zu Förderkriterien und Transportweg- bzw. Förderstrecken-Geschwindigkeiten;
- Fig. 5: eine Veranschaulichung einer exemplarischen Zuordnung von Fördergütern zu den Förderkriterien der Fig. 3 in Abhängigkeit von zugehörigen Fördergut-Eigenschaften;
- Fig. 6: eine Veranschaulichung einer exemplarischen Zuordnung von Fördergüter und deren zugeordneter Förderkriterien zu Transportaufträgen;
- Fig. 7: eine Veranschaulichung einer exemplarischen Zuordnung der Transportaufträge der Fig. 6 zu Transportwegen und Betriebsmodus-Phasen;
- Fig. 8: eine Veranschaulichung einer exemplarischen Zuordnung der Förderstrecken bzw. den daraus gebildeten Transportwegen zu den Betriebsmodus-Phasen bzw. den entsprechenden Förderkriterien, die wiederum Fördergeschwindigkeiten entsprechen;
- Fig. 9: eine prozentuale Verteilung der Förderkriterien, die allen Transportaufträgen eines Zeitfensters zugeordnet sind; und
- Fig. 10: ein Flussdiagramm eines Verfahrens zum Betreiben eines Fördersystems.

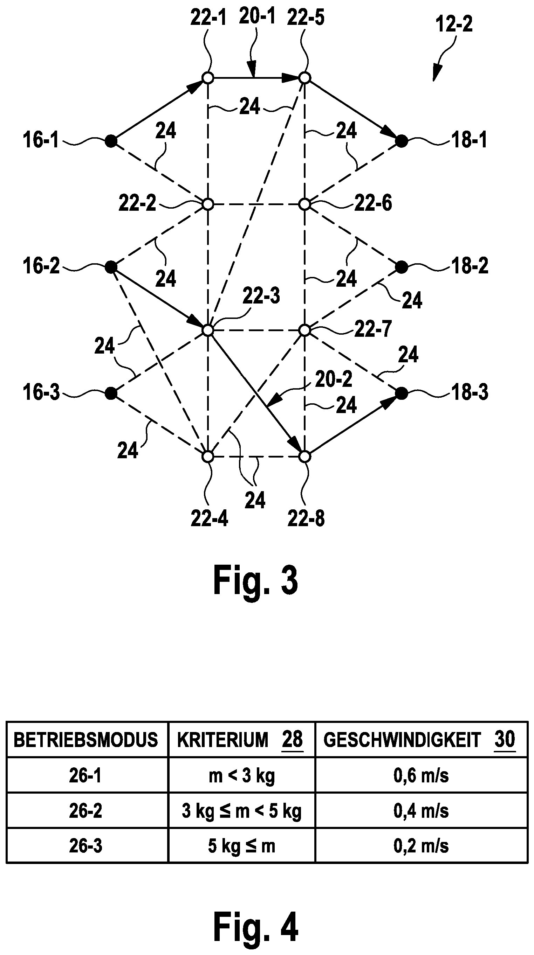

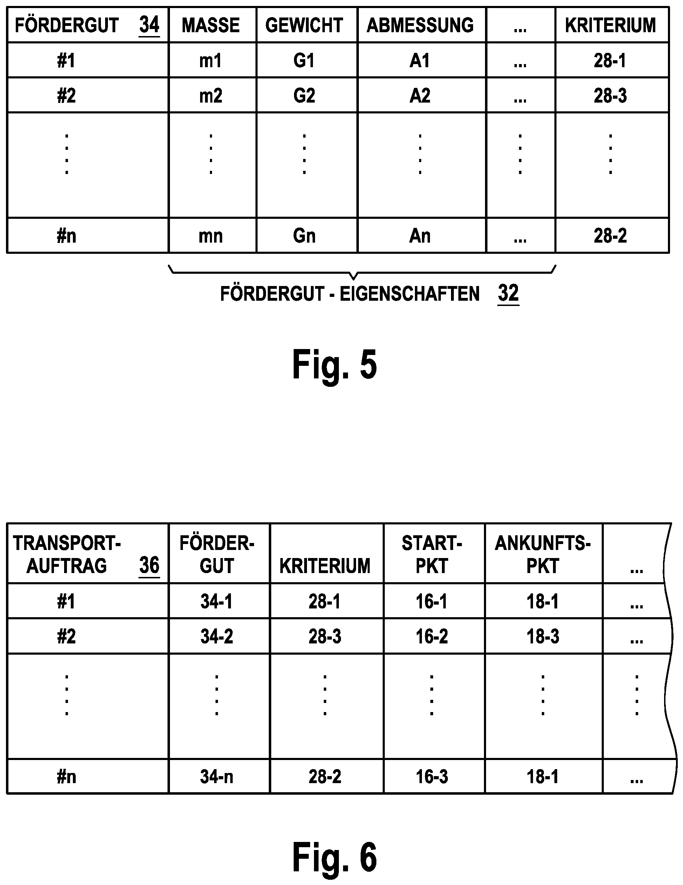

Die vorliegende Erfindung betrifft generell ein modular aufgebautes Fördersystem 10, in welchem Fördergüter, insbesondere Stückgüter, 34 (Fig. 5) mit oder ohne Ladungsträger (nicht gezeigt) in einem angetriebenen Transport bzw. Fördernetz 12 über dessen Förderstrecken 24 (Fig. 3) von einer Station zu einer anderen Station gefördert werden.

Vorzugsweise werden für die Förderstrecken 24 Stetigförderer eingesetzt. Stetigförderer sind (innerbetriebliche) Förderer, die einen kontinuierlichen Transportstrom entlang eines vorab festgelegten Streckenverlaufs über eine begrenzte Entfernung gewährleisten. Das Fördergut 34 kann zwischen beteiligten Stationen 16, 18 und ggf. 22 (vgl. Fig. 3), die durch die Förderstrecken 24 verbunden sind, stetig oder im Takt bewegt werden. Die Fördergüter 34 sind stetig (d.h. ständig) in Bewegung. Exemplarische Stetigförderer sind: Rollenförderer, Hängeförderer, Bandförderer, Kettenförderer und dergleichen.

Die Bewegungen der Fördergüter 34 innerhalb des Transport- bzw. Fördersystems 10 werden durch fördergutspezifische Transportaufträge 36 (vgl. Fig. 6) ausgelöst. Die Transportaufträge 36 können vorgeben, zu welchen Abhol- bzw. Startzeiten die Fördergüter 34 an welchen Abholorten bzw. Startpunkten zu übernehmen sind und bis zu welcher Ankunftszeit die Fördergüter 34 an ihrem jeweiligen Zielort bzw. Ankunftspunkt abzuliefern sind.

Zusätzliche Transportanforderungen (z.B. maximal zulässige Beschleunigung, maximal zulässige Förderstreckensteigung, maximal zulässiges Gefälle, etc.), die für jeden Transportauftrag 36 zusätzlich hinterlegt sein können, können z.B. aus einer Empfindlichkeit bzw. Zerbrechlichkeit des Förderguts 34 resultieren.

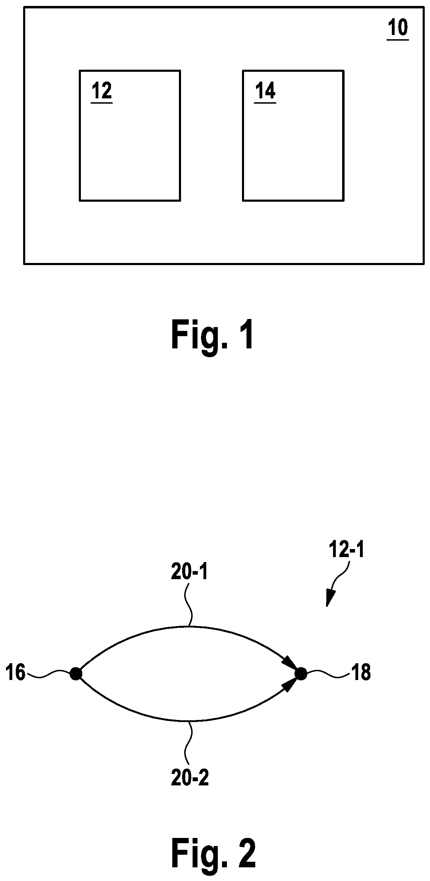

Ein Beförderungsbedarf, der auch Durchsatz genannt wird, ist durch eine Anzahl von Transportaufträgen 34 pro Zeiteinheit zwischen Eingangs- und Ausgangsstationen 16 und 18 (vgl. Fig. 2) definiert. Aus dem Beförderungsbedarf resultiert das Fördergutaufkommen. Das Fördergutaufkommen entspricht einer Anzahl von Fördergütern 34, die pro Zeiteinheit zwischen den Stationen 16 und 18 zu befördern sind.

Die Förderstrecken 24 spannen zwischen den Stationen 16, 18 und 22, und insbesondere zwischen den Eingangsstationen 16 und Ausgangsstationen 18, ein Transport- bzw. Fördernetz 12 auf. Durch das Fördernetz 12 fließen Ströme von Fördergütern 34, die von einer Steuerung 14 (Fig. 1) so durch das entsprechende Netzwerk gelenkt werden, dass die vorgegebenen Transportaufträge 34 erfüllt werden.

Sind die Stationen 16, 18 und 22 bereits durch ein festes Netz 12 miteinander verbunden, kann die Transportaufgabe darin bestehen, die anstehenden Transportaufträge 36 innerhalb von geforderten Transportzeiten zu möglichst geringen Kosten durchzuführen.

Abhängig von einer Anordnung und Verknüpfung der Stationen 16, 18 und 22 über die Förderstrecken 24 hat das Netzwerk eine Linien-, Ring- und/oder Sternstruktur.

Fig. 1 zeigt ein schematisches Blockdiagramm des Fördersystems 10 gemäß der Erfindung.

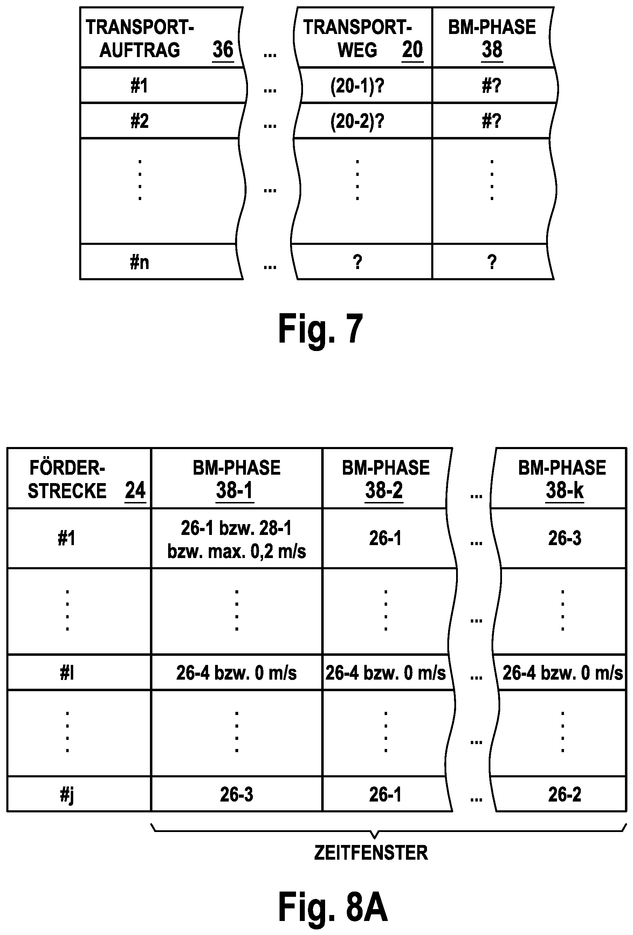

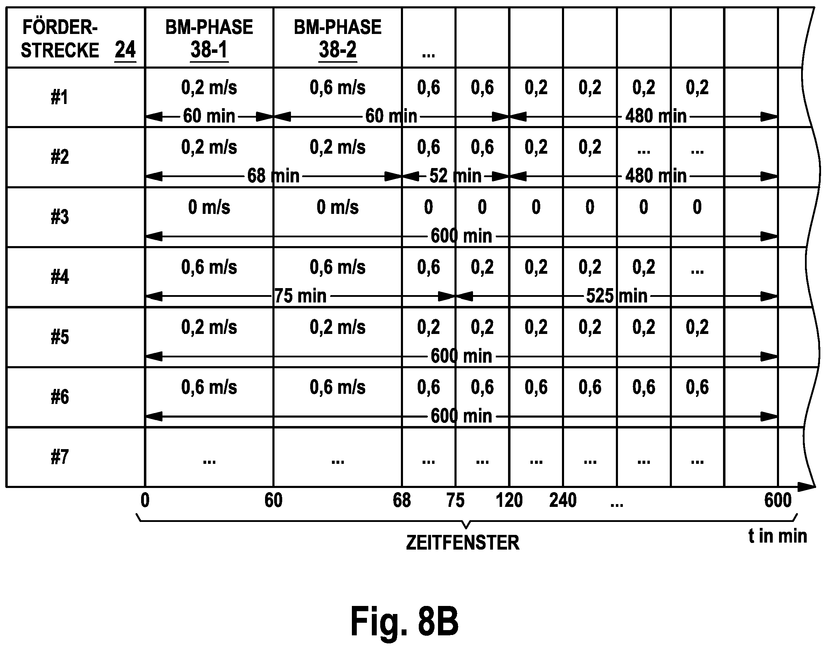

Das Fördersystem 10 weist das Fördernetz(werk) 12 auf, das die Funktion eines Transportnetzes hat. Ferner weist das System 10 die Steuerung 14 auf, die eingerichtet ist, Optimierungsprozesse für die Transportaufträge 34 in Abhängigkeit von Förderkriterien 28 (Fig. 4) durchzuführen, um die Förderstrecken 24 des Fördernetzes 12 optimiert in Bezug auf eine (Förder-) Geschwindigkeit 30 (vgl. Fig. 4) zu steuern, wie es nachfolgend noch näher ausgeführt werden wird. Die Steuerung 14 kann in Form von Hardware und/oder Software implementiert sein. Die Steuerung 14 kann z.B. einen Materialflussrechner umfassen, der insbesondere zum Steuern der Fördergeschwindigkeiten der Förderstrecken 24 für alle Betriebsmodus-Phasen 38 (Fig. 8) eingerichtet ist, die gemeinsam ein Zeitfenster bilden, in welches die Transportaufträge 36 der Fördergüter 34 fallen.

Fig. 2 zeigt eine schematische Veranschaulichung eines sehr einfach aufgebauten ersten Fördernetzes 12-1. Generell gilt, dass jedes Fördernetz 12 mindestens eine Eingangsstation 16 und mindestens eine Ausgangsstation 18 aufweist, die (jeweils) über mehrere unterschiedliche Transportwege 20 miteinander verbunden sind. Die Eingangsstationen 16 stellen für einen Material- bzw. Fördergutfluss Quellen dar, wo das Fördergut 34 (nicht dargestellt) in das Fördernetz 12 eintritt. Die Ausgangsstationen 18 stellen Senken dar, wo die Fördergüter 34 austreten.

Das Fördernetz 12-1 der Fig. 2 weist exemplarisch genau eine Eingangsstation 16 und genau eine Ausgangsstation 18 auf, die über z.B. zwei Transportwege 20-1 und 20-2 miteinander verbunden sind. Ein Fördergut (nicht dargestellt), das von der Eingangsstation 16 zur Ausgangsstation 18 zu transportieren ist, kann also über mehrere unterschiedliche Transportwege 20, hier über die Transportwege 20-1 und 20-2, zur Ausgangsstation 18 transportiert werden. Es versteht sich, dass mehr als zwei unterschiedliche Transportwege 20 für jedes Eingangsstation-Ausgangsstations-Paar vorgesehen sein können.

Im Fördernetz 12-1 der Fig. 2 wird jeder der Transportwege 20-1 und 20-2 jeweils durch nur eine einzige Förderstrecke 24 gebildet. Die Transportwege 20 können generell durch ein oder mehrere zusammenhängende Förderstrecken 24 gebildet werden, wie es in Bezug auf Fig. 3 näher erläutert werden wird.

Fig. 3 zeigt eine schematische Veranschaulichung ein abgewandeltes, zweites Fördernetz 12-2, das einen höheren Komplexitätsgrad als das einfache Fördernetz 12-1 der Fig. 2 aufweist.

Das Fördernetz 12-2 der Fig. 3 weist mehrere Eingangsstationen 16, mehrere Ausgangsstationen 18 sowie jeweils mehrere (mögliche) Transportwege 20 zwischen den Eingangsstationen 16 und den Ausgangsstationen 18 auf, die sich jeweils aus mehreren Förderstrecken 24 zusammensetzen. In der Fig. 3 sind zwei (mögliche) Transportwege 20-1 und 20-2 exemplarisch mit jeweils einer durchgezogenen Linie hervorgehoben verdeutlicht.

Das Fördernetz 12-2 der Fig. 3 weist ferner mehrere (optionale) Knotenpunkte in Form von Zwischenstationen 22 auf, die in Bezug auf den Fördergutfluss zwischen den Eingangsstationen 16 und den Ausgangsstationen 18 angeordnet sind.

In der Fig. 3 sind exemplarisch acht Knotenpunkte 22-1 bis 22-8 gezeigt. Die Knotenpunkte 22 sind untereinander und mit den Stationen 16 und 18 über die Förderstrecken 24 verbunden, die in der Fig. 3 mit Strichlinien angedeutet sind. Die Förderstrecken 24 können beliebige Knotenpunkte 22 miteinander verbinden.

Die Förderstrecken 24 stellen generell neben den Stationen 16 und 18 sowie den optionalen Knotenpunkten 22 elementare Komponenten eines Fördernetzes 12 dar. Es versteht sich, dass die Fördernetze 12 generell einen, mehrere (Fig. 3) oder keinen Knotenpunkt 22 (Fig. 2) aufweisen können.

Die Förderstrecken 24 können generell mit einer oder ohne logistische Funktion ausgestattet sein. Ein Sorter, der z.B. durch einen in sich geschlossenen Förderer implementiert ist, stellt ein Beispiel für eine Förderstrecke 24 mit logistischer Funktion dar. Ein Linearförderer, der z.B. zwei Knotenpunkte 22 auf kürzestem Weg miteinander verbindet, stellt eine Förderstrecke 24 ohne logistische Funktion dar.

Es versteht sich, dass die Förderstrecken 24 allgemein durch jeden Förderertyp oder eine Aneinanderreihung gleichartiger oder verschiedener Förderertypen implementiert sein können. Exemplarische Förderertypen sind: Rollenförderer, Bandförderer, Hängeförderer, Kettenförderer und dergleichen. Die Förderstrecken 24 sind vorzugsweise als Stetigförderer implementiert.

In der Fig. 3 verbindet der Transportweg 20-1 die Eingangsstation 16-1 mit der Ausgangsstation 18-1. Der Transportweg 20-2 verbindet die Eingangsstation 16-2 mit der Ausgangsstation 18-3. Jeder der Transportwege 20-1 und 20-2 wird jeweils durch drei Förderstrecken 24 gebildet. Generell kann ein Transportweg 20 aus einer oder mehreren Förderstrecken 24 gebildet sein.

Der Transportweg 20-1 der Fig. 3 wird durch die Förderstrecken 24 gebildet, die die Eingangsstation 16-1 mit dem Knotenpunkt 22-1, den Knotenpunkt 22-1 mit dem Knotenpunkt 22-5 und den Knotenpunkt 22-5 mit der Ausgangsstation 18-1 verbinden. Diese Förderstrecken 24 sind hintereinander gekoppelt und koppeln die Eingangsstation 16-1 an die Ausgangsstation 18-1.

Ähnliches gilt für den Transportweg 20-2 der Fig. 3, der ebenfalls aus drei Förderstrecken 24 gebildet ist, nämlich aus den Förderstrecken 24, die die Eingangsstation 16-2 mit dem Knotenpunkt 22-3, den Knotenpunkt 22-3 mit dem Knotenpunkt 22-8 und den Knotenpunkt 22-8 mit der Ausgangsstation 18-3 verbinden. Diese drei Förderstrecken 24 koppeln die Eingangsstation 16-2 an die Ausgangsstation 18-3.

Es versteht sich, dass die Eingangsstation 16 und die Ausgangsstation 18 auch über andere Transportwege 20 miteinander verbindbar sind, die in der Fig. 3 nicht dargestellt, aber möglich sind. Die Eingangsstation 16-1 könnte alternativ mit der Ausgangsstation 18-1 über die Förderstrecken 24 verbunden werden, die die Eingangsstation 16-1 mit dem Knotenpunkt 22-2, den Knotenpunkt 22-2 mit dem Knotenpunkt 22-6 und den Knotenpunkt 22-6 mit der Ausgangsstation 18-1 verbinden.

Generell gilt ferner, dass jede der Förderstrecken 24 in einer Vielzahl unterschiedlicher Betriebsmodi 26 für eine vorgegebene Zeitdauer (Betriebsmodus-Phase 38, Fig. 8) betreibbar ist. Die Förderstrecken 24, und somit auch die Transportwege 20, sind so eingerichtet, dass sie nahezu sofort durch die Steuerung 14, z.B. auf Basis eines entsprechenden Steuersignals (nicht gezeigt), aus einem der Betriebsmodi 26 in einen anderen der Betriebsmodi 26 umgeschaltet werden können.

Die Umschaltung resultiert in einer Änderung der Geschwindigkeit 30, mit der die entsprechende Förderstrecke 24 für die nächste Phase 38 konstant bestrieben wird. Die Umschaltung erfolgt üblicherweise automatisch. Die Umschaltung erfolgt auch dynamisch, nämlich in Abhängigkeit von Eigenschaften bzw. Kriterien 28 der Fördergüter 34, wie es nachfolgend unter Bezugnahme auf die Fig. 4 und 5 noch näher erläutert werden wird.

Es versteht sich, dass die nachfolgend gezeigten Tabellen jeweils in Form eines entsprechenden Datensatzes in der Steuerung 14 hinterlegt sein können sowie durch die Steuereinheit 14 bearbeitet und verarbeitet werden können.

Fig. 4 zeigt eine Tabelle zur Veranschaulichung von, exemplarisch drei, unterschiedlichen Betriebsmodi 26-1 bis 26-3. Es versteht sich, dass es generell mindestens zwei verschiedene Betriebsmodi 26 gibt, in denen die Transportwege 20 bzw. die Förderstrecken 24 betrieben werden können. Die Betriebsmodi 26 unterscheiden sich im Wesentlichen durch ihre zugeordnete Geschwindigkeit 30, mit der der Transportweg 20 bzw. die zusammenhängenden Förderstrecken 24 für die Dauer einer Betriebsmodus-Phase 38 betrieben werden.

Gemäß der Fig. 4 werden alle Förderstrecken 24, die im ersten Betriebsmodus 26-1 betrieben werden, exemplarisch mit einer ersten konstanten Geschwindigkeit von 0,6 m pro Sekunde betrieben. Alle Förderstrecken 24, die im zweiten Betriebsmodus 26-2 betrieben werden, werden mit einer konstanten Fördergeschwindigkeit von 0,4 m pro Sekunde betrieben. Alle Förderstrecken 24, die im Betriebsmodus 26-3 betrieben werden, werden mit einer konstanten Fördergeschwindigkeit von 0,2 m pro Sekunde betrieben.

Entscheidend dafür, in welchem der unterschiedlichen Betriebsmodi 26 jede der Förderstrecken 24 betrieben werden, ist ein Fördergutkriterium 28.

Der Betriebsmodus 26-1 wird z.B. gewählt, wenn ein zu transportierendes Fördergut 34 eine Masse m aufweist, die z.B. kleiner als 3 kg ist, was dem ersten Fördergutkriterium 28-1 entspricht. Der Betriebsmodus 26-2 wird gewählt, wenn die Masse m des Förderguts 34 größer oder gleich 3 kg, aber kleiner als 5 kg ist, was dem zweiten Fördergutkriterium 28-2 entspricht. Der dritte Betriebsmodus 26-3 wird gewählt, wenn die Masse m des Förderguts 34 größer oder gleich 5 kg ist, was dem dritten Fördergutkriterium 28-3 entspricht.

Es versteht sich, dass die Masse m des Förderguts nur eine exemplarische Eigenschaft des Förderguts 34 ist, die das (Förder-) Kriterium 28 bestimmt. Alternativ könnte z.B. ein Volumen, eine Abmessung, eine Zerbrechlichkeit oder Ähnliches des Förderguts 34 gewählt werden, um die Kriterien 28 zu definieren.

Ferner versteht es sich, dass die in Fig. 4 für die Masse m gezeigten Bereichsgrenzen lediglich exemplarischer Natur sind. Die Bereichsgrenzen sind generell frei wählbar und sind z.B. durch die maximale Einzellast (vgl. Einleitung) zu definieren. Analoges gilt für die Geschwindigkeiten 30, die dem jeweiligen Kriterium 28 und dem jeweiligen Betriebsmodus 26 zugeordnet sind.

Generell gilt, dass jedem der Betriebsmodi 26 jeweils ein Förderkriterium 28 und jeweils eine Geschwindigkeit 30 zugeordnet ist.

Fig. 5 zeigt eine Tabelle zur Veranschaulichung von Fördergut-Eigenschaften 32 und eine sich aus den Eigenschaften 32 ergebende Klassifizierung bzw. Zuordnung von n Fördergütern 34 exemplarisch zu den drei Fördergutkriterien 28-1 bis 28-3 der Fig. 4.

In der Fig. 5 weist das Fördergut 34-1 eine Masse m1 (z.B. 2 kg), ein Gewicht G1, eine Abmessung A1 usw. auf. Weil die Masse m1 2 kg ist und weil die Fördergeschwindigkeit 30 gemäß der Fig. 4 von der Masse m abhängt, wird dem Fördergut 34-1 das Förderkriterium 28-1 zugeordnet. Dies bedeutet, dass das Fördergut 34-1 mit einer Fördergeschwindigkeit 30 von (maximal) 0,6 m pro Sekunde über die Förderstrecken 24 transportiert werden darf.

Wenn man davon ausgeht, dass die Masse m2 des Förderguts 34-2 z.B. 8 kg beträgt, so erklärt sich die Zuordnung des Förderkriteriums 28-3 zum Fördergut 34-2. Dies bedeutet, dass das Fördergut 34-2 mit einer maximalen Geschwindigkeit von 0,2 m pro Sekunde transportiert werden darf. Dies schließt aber aus, dass das Fördergut 34-2 auch mit einer höheren Fördergeschwindigkeit 30, wie z.B. 0,6 m pro Sekunde (Betriebsmodus 26-1 bzw. Kriterium 28-1) oder 0,4 m pro Sekunde (Betriebsmodus 26-2 bzw. Kriterium 28-2), transportiert werden darf.

Wenn man davon ausgeht, dass das Fördergut 34-n eine Masse m von z.B. 4 kg aufweist, so erklärt sich die Zuordnung des Förderkriteriums 28-2 zum Fördergut 34-n. Dies bedeutet, dass das Fördergut 34-n mit einer Fördergeschwindigkeit 30 von (max.) 0,4 m pro Sekunde zu transportieren ist, wobei es nicht ausgeschlossen ist, das Fördergut 34-n auch mit der Fördergeschwindigkeit 30 von 0,2 m pro Sekunde gemäß dem Förderkriterium 28-3 transportieren wird (zusätzlicher Freiheitsgrad für den Optimierungsprozess).

Die Steuerung 14 ist generell dazu eingerichtet, dass jedem Fördergut 34, das innerhalb eines vorgegebenen Zeitfensters (z.B. innerhalb von 10 Stunden) durch das Fördernetz 12 zu transportieren ist, jeweils eines der Förderkriterien 28 und damit auch eine bevorzugte Fördergeschwindigkeit 30 zugeordnet wird.

Das oben erwähnte Zeitfenster definiert die zeitlichen Grenzen für Transportaufträge 36, die beim Optimieren berücksichtigt werden.

Die Steuerung 14 ist eingerichtet, die Betriebsmodi 26 für die zur Verfügung stehenden Förderstrecken 24 des jeweiligen Fördernetzes 12 sowie - in Abhängigkeit davon - die Transportwege 20 für jeweils ein (gesamtes) Zeitfenster, insbesondere durchsatzoptimiert, festzulegen.

Die Dauer des Zeitfensters ist kleiner als ein Tag (24 Stunden), insbesondere wenn ein dem Fördersystem 10 zugrunde liegendes Geschäftsmodell (z.B. wie E-Commerce) einen Transport (d.h. Kommissionierung und Versand) der Fördergüter 34 innerhalb eines Tages erforderlich macht.

Das Zeitfenster könnte mehrere Stunden groß sein. Die Betriebsmodi 26 könnten jeweils z.B. 30 Minuten oder eine Stunde andauern (Betriebsmodus-Phase 28), so dass jede der Förderstrecken 24 innerhalb des Zeitfensters mehrmals (d.h. dynamisch) seinen Betriebsmodus 26 (d.h. die Fördergeschwindigkeit) wechseln könnte, sollte dies für die Durchsatzoptimierung erforderlich sein.

Es versteht sich, dass die hier angegebenen Größen für das Zeitfenster und für die Betriebsmodi 26 lediglich exemplarischer Natur sind. Allgemein gilt aber, dass die Dauer des Zeitfensters größer oder gleich der Dauer eines Betriebsmodus 26 ist, wobei alle Betriebsmodi 26 insbesondere gleich lang andauern.

Natürlich ist es auch möglich, dass die Betriebsmodus-Phasen 38 unterschiedlich lang sein können, wobei jedoch die Summe der Phasen das Zeitfenster ergibt. Dies ist in Fig. 8B gezeigt, wo zusätzlich noch die jeweilige Dauer der Phasen 38 eingezeichnet ist. Die erste Phase 38-1 dauert z.B. 60 min an. Die zweite Phase dauert z.B. 8 min an und so weiter. Die Summe der Phasen 38 beträgt aber jeweils 600 min.

Das Zeitfenster ist außerdem eine weitere Fördergut-Eigenschaft 32, die in der Tabelle der Fig. 5 nicht dargestellt ist. Das Zeitfenster legt grob fest, wann das jeweilige Fördergut 34 im Fördernetz 12 zu transportieren ist.

Bezug nehmend auf Fig. 6 ist eine exemplarische Tabelle zur Veranschaulichung der Transportaufträge 36 gezeigt.

Jedem Transportauftrag 36 ist (genau) eines der Fördergüter 34 zugeordnet, und umgekehrt. Gleiches gilt für das Förderkriterium 28, das dem Transportauftrag 36 über das jeweilige Fördergut 34 zugeordnet ist.

Ferner weist jeder Transportauftrag 36 einen Startpunkt und einen Ankunftspunkt innerhalb des Fördernetzes 12 auf. Der Startpunkt ist (örtlich) durch eine der Eingangsstationen 16 definiert. Der Ankunftspunkt ist (örtlich) durch eine der Ausgangsstationen 18 definiert.

Außerdem ist jedem Transportauftrag 36 das Zeitfenster (nicht in Fig. 6 gezeigt) zugeordnet, das wiederum dem entsprechenden Fördergut 34 zugeordnet ist (und umgekehrt), wie oben erläutert.

Ferner können jedem Transportauftrag 36, und somit auch jedem Fördergut 34, ferner eine Startzeit (nicht gezeigt) und/oder eine Ankunftszeit (nicht gezeigt) zugeordnet sein. Insbesondere die Ankunftszeit kann von besonderer Bedeutung sein. Über die Ankunftszeit (und die Ausgangsstation) lassen sich verschiedene Fördergüter 34, die aus unterschiedlichen Quellen stammen können, an einem Ort (d.h. an der zugeordneten Ausgangsstation 18) örtlich und zeitlich zusammenführen.

Dies kann für Kommissioniersysteme (nicht gezeigt) wichtig sein, die das System 10 integriert haben und in denen unterschiedliche Fördergüter 34, die alle zu einem Kunden- bzw. Kommissionierauftrag (nicht gezeigt) gehören, an der Ausgangsstation 18 nahezu gleichzeitig ankommen müssen, um z.B. in das gleiche Paket verpackt zu werden, das anschließend an den Kunden verschickt wird, der die entsprechenden (Förder-)Güter bestellt hat. Noch bedeutender ist diese Synchronisierung, wenn das Kommissioniersystem in einem sogenannten Batch-Betrieb betrieben wird.

Zurückkehrend zur Fig. 6 ist der Transportauftrag 36-1 dem Fördergut 34-1 und somit dem Förderkriterium 28-1 zugeordnet. Der Transportauftrag 36-1 startet z.B. an der Eingangsstation 16-1 und endet z.B. an der Ausgangsstation 18-1. Der Transportauftrag 36-2 ist dem Fördergut 34-2 zugeordnet. Somit ist der Transportauftrag 36-2 dem Förderkriterium 28-3 zugeordnet. Der Transportauftrag 36-2 kann z.B. in der Eingangsstation 16-2 starten und in der Ausgangsstation 18-3 enden.

Da jedem der n Fördergüter 34 jeweils einer der Transportaufträge 36 zugeordnet ist (und umgekehrt), umfasst die Tabelle der Fig. 6 also auch n Transportaufträge 36.

Fig. 7 stellt eine Fortsetzung der Tabelle der Transportaufträge 36 der Fig. 6 dar. Fig. 7 dient der Verdeutlichung eines Teilaspekts der Durchsatzoptimierung. Dieser Teilaspekt drückt sich darin aus, dass für jeden der Transportaufträge 36 ein Transportweg 20 bzw. eine Kette von Förderstrecken 24 (vgl. Fig. 3) auszuwählen ist, der zur vorgegebenen Zeit (Transportzeit des Förderguts 34) im richtigen Betriebsmodus 26 sein muss, wobei der Betriebsmodus 26 wiederum durch das Förderkriterium 28 vorgegeben ist. Dies bedeutet also, dass sich der ausgewählte Transportweg 20 zur Transportzeit in einem geeigneten Betriebsmodus 26 befinden muss.

Wenn der Transportweg 20 z.B. während einer ersten Phase 38 nicht im geeigneten Betriebsmodus 26 ist, könnte er aber vielleicht in einer zweiten Phase 28 im geeigneten Modus 26 sein. Dies lässt sich aus der Tabelle der Fig. 8 ableiten, die nachfolgend noch genauer erklärt werden wird.

Ein weiterer Aspekt der Durchsatzoptimierung ist in der Tabelle der Fig. 8A veranschaulicht. Die Fig. 8A zeigt eine exemplarische Zuordnung von j Förderstrecken 24-1 bis 24-j zu den drei Betriebsmodi 26-1 bis 26-3 (vgl. Fig. 4) für jede von k Betriebsmodus-Phasen 38-1 bis 38-k, vorausgesetzt das Zeitfenster ist in k Betriebsmodus-Phasen 38 unterteilt. Dies bedeutet mit anderen Worten, dass die Steuerung 14 für jede der Förderstrecken 24 einen der Betriebsmodi 26 für jede der k Betriebsmodus-Phasen 38 auswählen muss. Diese Auswahl wird abhängig vom Fördergut-Kriterium 28 getätigt, welches wiederum die Fördergeschwindigkeit 30 der jeweiligen Förderstrecke 24 bestimmt.

Die Auswahlprozesse der Fig. 7 und 8A sind voneinander abhängig. Sie sind insbesondere Teil der Durchsatzoptimierung.

Die Durchsatzoptimierung hat generell das Ziel, möglichst viele Fördergüter 34 in möglichst kurzer Zeit (vorzugsweise geringer als Zeitfenster) unter Verwendung von möglichst wenigen der Förderstrecken 24 und unter Berücksichtigung des Förderkriteriums 28 vom jeweiligen Startpunkt zum jeweiligen Ankunftspunkt durch das Fördernetz 12 zu transportieren.

In der Fig. 8A wurde bereits jeder der j Förderstrecken 24 einer der drei Betriebsmodi 26 für jede der k Betriebsmodus-Phasen 38 durch die Steuereinrichtung 14 im Wege des durchsatzoptimierten Auswahlverfahrens zugeordnet. Diese Zuordnung basiert auf einer Verteilung der Förderkriterien 28 über alle Transportaufträge 36, die in das relevante Zeitfenster fallen.

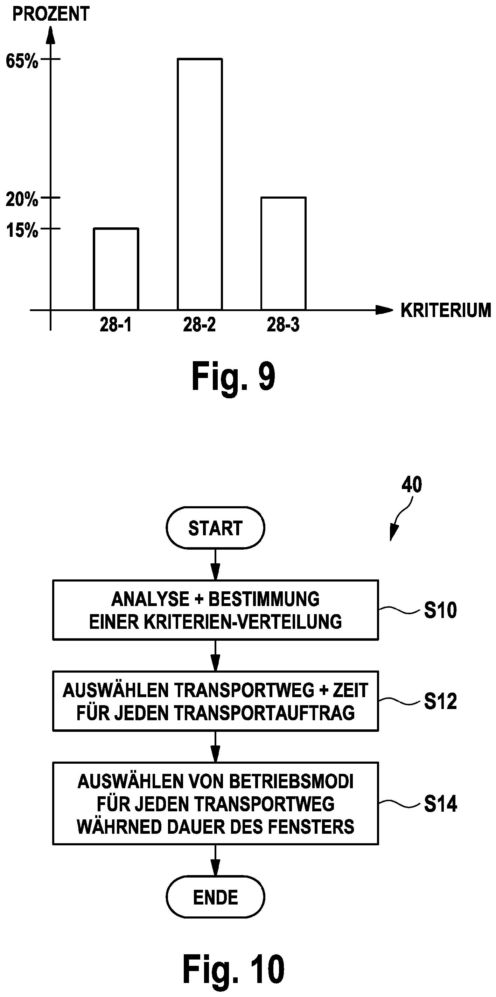

Die Fig. 9 veranschaulicht exemplarisch, dass 15 % der n Transportaufträge 36 (vgl. Fig. 6) bzw. der n Fördergüter (vgl. Fig. 5) das erste Förderkriterium 28-1 aufweisen. 65 % der Fördergüter 34, und somit auch 65 % der Transportaufträge 36, wurde durch die Steuerung 14 das Förderkriterium 28-2 zugeordnet. 20 % der Fördergüter 34 bzw. der Transportaufträge 36 wurde durch die Steuerung 14 das dritte Förderkriterium 28-3 zugewiesen.

Dies bedeutet mit anderen Worten, dass 15 % der Fördergüter 34 mit einer Geschwindigkeit 30 von maximal 0,6 m pro Sekunde transportiert werden dürfen, 65 % der Fördergüter 34 dürfen mit einer maximalen Fördergeschwindigkeit 30 von 0,4 m pro Sekunde transportiert werden und 15 % der Fördergüter 34 bzw. der Transportaufträge 36 dürfen mit einer maximalen Fördergeschwindigkeit 30 von 0,2 m pro Sekunde transportiert werden.

Die Fig. 8 spiegelt eine (bereits durchgeführte) exemplarische Zuordnung der Betriebsmodi 26 zu den Förderstrecken 24 für die jeweiligen Betriebsmodus-Phasen 38 basierend auf der Verteilung der Fig. 9 wider.

Die Zuordnung der Transportwege 20 und der damit verbundenen Transportzeiten bzw. Betriebsmodus-phasen 38 zu den Transportaufträgen 36 ist in der Fig. 7 noch nicht vollständig abgeschlossen. Wenn der Optimierungsprozess jedoch vollständig durchlaufen ist, ist jedem der Transportaufträge 36 in Fig. 7 einer der möglichen Transportwege 20 und eine entsprechende Betriebsmodus-Phase 38 zugeordnet.

Ferner kann zusätzlich berücksichtigt werden, dass verschiedene der n Fördergüter 34 nahezu zeitgleich an einer der Ausgangsstationen 16 anzukommen haben. Dies ist z.B. dann der Fall, wenn ein Kundenauftrag zwei oder mehr Fördergüter 34 aufweist, wobei jedem der Fördergüter 34 ein anderes Fördergutkriterium 28 zugeordnet sein kann. Der Kunde könnte z.B. ein Buch (leicht, Kriterium 28-1) und eine Mikrowelle (schwer, Kriterium 28-3) bestellt haben, die dann gemeinsam in einem Paket an den Kunden zu verschicken sind. In diesem Fall könnte die entsprechende Ausgangsstation 18 durch einen Packroboter (nicht gezeigt) implementiert sein, die Eingangsstationen 16 könnten unterschiedliche Lagerorte darstellen und die Transportwege 20 könnten für die Mikrowelle durch einen Rollenförderer (nicht gezeigt) und für das Buch durch einen Hängeförderer mit Taschen als Transportmittel (nicht gezeigt) inklusive einem Taschensorter implementiert sein.

Nachfolgend werden nochmals die Unterschiede zwischen dem Stand der Technik und dem vorliegenden Konzept erläutert.

Im Stand der Technik konnten die Förderstrecken 24, wie eingangs erwähnt, z.B. mit einer Fördergeschwindigkeit 30 von 0,556 m pro Sekunde bei einer maximalen Streckenlast von 10 kg pro Meter und einer maximalen Einzellast von 4,5 kg oder alternativ mit einer zweiten Fördergeschwindigkeit 30 von 0,278 m pro Sekunde bei einer maximalen Streckenlast von 25 kg pro Meter und einer maximalen Einzellast 12,5 kg betrieben werden. Wenn nun Fördergüter 34 mit Massen von 0,1 bis 12,5 kg durch das Fördernetz 12 zu transportieren waren, erfolgte die Auslegung und Parametrierung der Förderstrecken 24 im Stand der Technik unter Berücksichtigung der größtmöglichen Beanspruchung, weil es im Allgemeinen nicht vorhersehbar war, wann welcher Betriebsparameter (Fördergeschwindigkeit) individuell an jedem Modul (manuell) veränderbar gewesen wäre. Es war nicht vorhersehbar, wann welches Fördergut wo erscheint.

In diesem Fall durfte also jede der Förderstrecken 24 wegen der größten Einzellast von 12,5 kg mit einer maximalen Geschwindigkeit von 0,278 m pro Sekunde betrieben werden. Da außerdem die Streckenlast von 25 kg pro Meter einzuhalten war, betrug der minimale Fördergutabstand (kleinstmögliche Teilung T) 0,5 m. Jede der Förderstrecken 24 konnte also in einer Stunde knapp 2000 Fördergüter transportieren (Produkt aus Geschwindigkeit und 3600 Sekunden geteilt durch Fördergutabstand). Damit betrug der Durchsatz jeder der Förderstrecken max. 2000 Fördergüter pro Stunde. Wenn nun innerhalb einer Betriebszeit von 10 Stunden 380.000 Stück zu transportieren waren, wurden 19 Förderlinien benötigt.

Bei der Erfindung werden alternativ zu diesem oben skizzierten Stand der Technik die Fördergüter 34, die weiterhin Einzelmassen von 0,1 bis 12,5 kg aufweisen, in drei Gruppen bzw. Förderkriterien 28-1 bis 28-3 eingeteilt (28-1: < 2 kg; 28-2: 2 kg - 4,5 kg; 28-3: 4,5 kg - 12,5 kg). Diese drei Förderkriterien 28 resultieren in drei unterschiedlichen Betriebsmodi 26-1 bis 26-3 (26-1: 0,556 m pro Sekunde, T = 0,2 m, Durchsatz = 10.000 Stück pro Stunde; 26-2: 0,556 m pro Sekunde, T = 0,445 m, Durchsatz = 4500 Stück pro Stunde; 26-3: 0,278 m pro Sekunde, T = 0,5 m, Durchsatz = 2000 Stück pro Stunde).

Die dem Fördernetz 12 zugeordnete Steuerung 14 wertet die vorliegenden Transportaufträge 36 aus und stellt für die Förderstrecken 24 die Betriebsmodi 26 entsprechend ein. Die Einstellung basiert auf der Verteilung der Förderkriterien (vgl. Fig. 9).

Es ist leicht zu verstehen, dass mit dieser Einstellung das Erreichen eines Gesamtdurchsatzes von z.B. 380.000 Stück in 10 Stunden erreichbar ist. In einem ersten Zeitabschnitt von 2 Stunden könnten z.B. sechs Transportwege 20, bzw. Förderstrecken 24 im Beispiel der Fig. 3, so konfiguriert sein, dass zwei Transportwege 20 im ersten Betriebsmodus 26-1, zwei Transportwege 20 im zweiten Betriebsmodus 26-2 und zwei Transportwege 20 im dritten Betriebsmodus 26-3 betrieben werden, so dass in diesem Zeitabschnitt 66.000 Fördergüter (= 2 x (2 x 10.000 + 2 x 4500 + 2 x 2000)) gefördert werden. In einem zweiten Zeitabschnitt von 7 Stunden könnten die sechs Transportwege 20 so konfiguriert sein, dass vier der Transportwege 20 im Betriebsmodus 26-1 und zwei der Transportwege 20 im Betriebsmodus 26-3 betrieben werden, so dass in diesem zweiten Zeitabschnitt von 7 Stunden insgesamt 308.000 Fördergüter (= 7 x (4 x 10.000 + 2 x 2000)) gefördert werden. In einem dritten Zeitabschnitt von einer Stunde (beachte: Summe aller drei Zeitabschnitte beträgt 10 Stunden) könnten die sechs Transportwege 20 so konfiguriert sein, dass alle sechs Transportwege 20 im dritten Betriebsmodus 26-3 betrieben werden, so dass im dritten Zeitabschnitt 12.000 Fördergüter (= 1 x 6 x 2000) gefördert werden. Somit wären in Summe 386.000 Artikel in 10 Stunden durch nur sechs Förderstrecken transportiert. Im Stand der Technik wurden dafür 19 Förderstrecken benötigt.

Dieses Beispiel verdeutlicht, dass das vorliegende Konzept eine erhebliche Verbesserung gegenüber dem Stand der Technik darstellt. Mit dem vorliegenden Konzept ist es möglich, bestehende Fördersysteme 10 entweder effizienter zu betreiben, weil mit einer fest vorgegebenen Anzahl von Förderstrecken 24 ein höherer Durchsatz (Anzahl Fördergüter pro Zeiteinheit) erzielt werden kann. Alternativ kann der gleiche Durchsatz mit weniger Förderstrecken 24 erreicht werden, da weniger Förderstrecken bereits ausreichen, um den gleichen Durchsatz zu erreichen. Dies resultiert in einem reduzierten Verschleiß und somit in reduzierten Wartungszyklen oder in einem Ruhezustand der verbleibenden 13 Förderstecken.

Bei der Planung neuer Fördersysteme 10 können Durchsätze bei der Dimensionierung des Fördersystems 10 berücksichtigt werden, die erst in der Zukunft erwartet werden. In diesem Zusammenhang hat der Betreiber des Fördersystems 10 die Wahl, entweder sofort eine entsprechende Anzahl von Förderstrecken 24 (für den zukünftig erwarteten Durchsatz) zu installieren, die dann entsprechend verschleißarm betrieben werden, oder vorerst weniger Förderstrecken 24 (bei entsprechend geringeren Investitionskosten) zu installieren, wobei jedoch die spätere Skalierbarkeit auf den gewünschten zukünftigen Durchsatz bereits eingeplant ist.

Als weitere Maßnahme kann bei der vorliegenden Erfindung das an sich hinsichtlich seiner Länge zeitlich feste Fenster über die Zeit wandern. Dies bedeutet z.B., dass ein erstes Zeitfenster für Transportaufträge durchsatzoptimiert bearbeitet wird, die zwischen 0 Uhr und 10 Uhr eingegangen sind. Ein zweites Zeitfenster (von 10 Stunden) könnte für Transportaufträge bearbeitet werden, die zwischen 10 Uhr und 20 Uhr eingegangen sind. Es versteht sich, dass sich die Zeitfenster auch überlappen dürften, so dass das zweite Fenster bereits um 6 Uhr gestartet wird, wobei einige Transportaufträge 36 dann sowohl zum ersten als auch zum zweiten Fenster gehören.

Alternativ zum Ansatz mit dem Zeitfenster könnte die Erfindung auch so ausgelegt sein, dass immer eine vorgegebene Anzahl von Transportaufträgen gleichzeitig bearbeitet wird. Das System 10 kann in diesem Fall z.B. so ausgelegt sein, dass immer maximal 60.000 Transportaufträge gleichzeitig durchsatzoptimiert bearbeitet und ausgeführt werden können. Wenn nach einer gewissen Zeitphase (z.B. 10 Minuten) einige der ursprünglichen Transportaufträge bearbeitet und ausgeführt sind, könnte der Menge von maximal zulässigen Transportaufträgen eine entsprechende Menge neu hinzugefügt werden, die der Menge der abgearbeiteten Transportaufträge entspricht.

Man spricht in den beiden zuletzt diskutierten Fällen auch von einem "Wave-picking".

Fig. 10 zeigt ein Verfahren 40 zum Betreiben des Fördersystems 10, um die Fördergüter 34 in Abhängigkeit von deren Förderkriterien 28 gemäß den Transportaufträgen 36 durch das Fördernetz 12 zu transportieren.

Das Verfahren 40 umfasst ein Analysieren (Schritt S10) der Transportaufträge 36, die in das Zeitfenster fallen, das eine Vielzahl von aufeinanderfolgenden Betriebsmodus-Phasen 38 umfasst, nach deren zugeordneten Förderkriterien 28, sowie ein Bestimmen der Verteilung der Förderkriterien 28 (vgl. Fig. 9), die den Transportaufträgen 36 zugeordnet sind.

Ferner umfasst das Verfahren 40 einen Schritt S12, bei dem für jeden Transportauftrag 36 jeweils einer der Transportwege 20 (d.h. eine Kette von Förderstrecken 24) und eine zugehörige Transportzeit (d.h. eine oder mehrere Betriebsmodus-Phasen 38) basierend auf dem jeweils zugeordneten Förderkriterium 28 ausgewählt wird, so dass der Durchsatz durch das Fördernetz 12 optimal ist.

Schließlich umfasst das Verfahren 40 einen Schritt S14, bei dem für jeden Transportweg 20 und für jede Betriebsmodus-Phase 38, die in das Zeitfenster fällt, ein Betriebsmodus 26 ausgewählt wird, der Förderkriterien-abhängig eine konstante Transportweg- bzw. Förderstrecken-Geschwindigkeit 30 definiert, wobei das Auswählen basierend auf der Verteilung der Förderkriterien 28 erfolgt, so dass der Durchsatz durch das Fördernetz 10 optimal ist.

Die vorliegende Betrachtung basiert auf dem Gedanken, dass das Zeitfenster (z.B. 10 Stunden) über die Anlagenbetriebsdauer (z.B. 6 Uhr bis 20 Uhr, d.h. 14 Stunden) mitwandert. Dies bedeutet, dass das Optimierungszeitfenster kleiner als die Anlagenbetriebsdauer (pro Tag) ist. So könnte z.B. um 6 Uhr eine erste Anlagenkonfiguration für die Dauer von 6 Uhr bis 16 Uhr bestimmt werden. Um 6.30 Uhr könnte eine Konfiguration für den Zeitraum 6.30 Uhr bis 16.30 Uhr bestimmt werden usw.

Alternativ könnte das Zeitfenster (z.B. 10 h) aber auch mit der Anlagenbetriebsdauer pro Tag (z.B. 8 Uhr bis 18 Uhr) gleichgesetzt werden. In diesem Fall könnte sich an den Schritt S14 eine (nicht gezeigte) zyklische (z.B. alle 10 min) Abfrage anschließen, um abzufragen, ob neue Transportaufträge vorliegen, die im ersten Zyklus noch nicht vorlagen bzw. berücksichtigt wurden. Wenn solche Aufträge vorliegen, wird die Verteilung (Schritt S10) neu bestimmt (und zwar für das restliche Zeitfenster) und basierend darauf werden die Auswahlschritte (Schritte S12 und S14) neu ausgeführt, was in einer anderen Anlagenkonfiguration (Fördergeschwindigkeit pro Strecke und Phase) als im vorhergehenden Zyklus resultieren kann. Dabei könnte auch berücksichtigt werden, dass einige Aufträge vorhergehender Zyklen bereits erledigt sind und dann nicht mehr in die Verteilung eines neuen Zyklus fallen.

Details zum Verfahren 40 ergeben sich auch aus der oben bereits gegebenen Erläuterung des Systems 10.

Ferner wird festgestellt, dass sowohl das System 10 als auch das Verfahren 40 insbesondere im Bereich eines Lager- und Kommissioniersystems zum Einsatz kommen können, welches zum Kommissionieren von Artikeln im Bereich des E-Commerce eingesetzt wird. Um Artikel kommissionieren zu können, müssen die Artikel durch das Lager- und Kommissioniersystem transportiert werden. Die Eingangsstationen 16 können in diesem Fall z.B. durch Lagerplätze in einem Lager implementiert sein. Die Zwischenstationen 22 könnten durch Kommissionier-Arbeitsplätze implementiert sein. Die Ausgangsstationen 18 können ebenfalls durch Arbeitsplätze oder durch einen Versandbereich implementiert sein.

### Bezugszeichenliste:

- 10: System
- 12: Förder/Transport-Netz(werk)
- 14: Steuerung
- 16: Eingangsstation (Quelle)
- 18: Ausgangsstation (Senke)
- 20: Transportweg
- 22: Knotenpunkt/Station
- 24: Förderstrecke
- 26: Betriebsmodus
- 28: Fördergut-Kriterium
- 30: (Transportweg-)Geschwindigkeit
- 32: Fördergut-Eigenschaften
- 34: Fördergut
- 36: Transportauftrag
- 38: Betriebsmodus-(BM-)Phase

## Patentansprüche

1. Fördersystem (10) mit einem Fördernetz (12) und mit einer Steuerung (14) zum Transport einer Vielzahl von Fördergütern (34) gemäß fördergutspezifischen Transportaufträgen (36) während eines Zeitfensters durch das Fördernetz (12),
wobei jedem der Fördergüter (34) eines von mehreren unterschiedlichen Förderkriterien (28) und einer der Transportaufträge (36) zugeordnet ist,
wobei das Fördernetz (12) eine Eingangsstation (16), eine Ausgangsstation (18) und mehrere Transportwege (20) aufweist,
wobei jeder der Transportwege (20) die Eingangsstation (16) mit der Ausgangsstation (18) verbindet, wobei jeder der Transportwege (20) während jeder Betriebsmodus-Phase (38) in einem von mehreren verschiedenen Betriebsmodi (26) betreibbar ist, wobei sich die Betriebsmodi (26) durch konstante Transportweg-Geschwindigkeiten (30) voneinander unterscheiden, wobei jedem der Betriebsmodi (26) basierend auf einem der Förderkriterien (28) jeweils eine der Transportweg-Geschwindigkeiten (30) zugeordnet ist und wobei das Zeitfenster durch mehrere aufeinander folgende Betriebsmodus-Phasen (38) definiert ist,
wobei die Betriebsmodi (26) für jeden der Transportwege (20) basierend auf den Förderkriterien (28), die den zugeordneten Fördergütern (34) zugeordnet sind, jeweils für eine der Betriebsmodus-Phasen (38) durch die Steuerung (14) so ausgewählt werden, dass ein Durchsatz der Fördergüter (34) durch das Fördernetz (12) während des Zeitfensters optimiert ist.

2. Fördersystem nach Anspruch 1, wobei für jedes der Fördergüter (34) einer der Transportwege (20) basierend auf den Förderkriterien (28) durch die Steuerung (14) so ausgewählt wird, dass der Durchsatz der Fördergüter (34) durch das Fördernetz (12) während des Zeitfensters optimiert ist.

3. Fördersystem nach Anspruch 2, wobei die Auswahl der Betriebsmodi (26) für die Transportwege (20) einerseits und die Auswahl der Transportwege (20) für die Transportaufträge (36) andererseits voneinander abhängig sind und durchsatzoptimiert erfolgen.

4. Fördersystem (10) einem der Ansprüche 1 bis 3, wobei jeder der Transportwege (20) eine oder mehrere miteinander verbundene Förderstrecken (24) aufweist, die die jeweilige Eingangsstation (16) mit der zugehörigen Ausgangsstation (18) verbinden.

5. Fördersystem (10) nach einem der Ansprüche 1 bis 4, wobei jeder der Transportaufträge (36) definiert ist durch:
das Förderkriterium (28), das dem jeweils zugeordneten Fördergut (34) zugeordnet ist;
das Zeitfenster;
einen örtlichen Startpunkt;
einen örtlichen Ankunftspunkt;
eine der Betriebsmodus-Phasen (38), während der ein Transport des jeweils zugeordneten Förderguts (34) am Startpunkt beginnt und am Ankunftspunkt endet; und
einen der Transportwege (20), der den Startpunkt mit dem Ankunftspunkt verbindet.

6. Fördersystem nach Anspruch 4 und 5, wobei der eine Transportweg (20) nur Förderstrecken (24) umfasst, deren Betriebsmodi (26) während der zugehörigen Betriebsmodus-Phase (38) dem gleichen Förderkriterium (28) wie der jeweilige Transportauftrag (36) zugeordnet sind.

7. Fördersystem nach einem der Ansprüche 1 bis 6, wobei das Fördernetz (12) eine Vielzahl von Eingangsstationen (16) aufweist und/oder eine Vielzahl von Ausgangsstationen (18) aufweist, wobei jede der Eingangsstation (16) mit wenigstens einer Ausgangsstation über mehrere der Transportwege (20) verbindbar ist.

8. Fördersystem nach einem der Ansprüche 1 bis 7, wobei die Steuerung (14) den Durchsatz optimiert, indem die Steuerung (14) eine Verteilung der Förderkriterien (28) über alle Transportaufträge (36), die zeitlich innerhalb des Zeitfenster liegen, bestimmt, um dann die Betriebsmodi (26) für jeden der Transportwege (20) basierend auf der Verteilung auszuwählen.

9. Fördersystem nach einem der Ansprüche 1 bis 8, wobei ein weiterer förderkriterium-unabhängiger Betriebsmodus (26) vorgesehen ist, der eine Transportweg-Geschwindigkeit (30) von Null aufweist, so dass sich der entsprechende Transportweg (20) in einem Ruhezustand befindet.

10. Fördersystem nach einem der Ansprüche 1 bis 9, wobei die Steuerung (14) beim Optimieren eine förderstreckenspezifische, maximale Belastbarkeit in Form eines minimalen Fördergutabstands (T) berücksichtigt.

11. Verfahren zum Betreiben eines Fördersystems (10), das ein Fördernetz (12), das eine Eingangsstation (16) über mehrere Transportwege (20, 24) mit einer Ausgangsstation (18) verbindet, und eine Steuerung (14), um Fördergüter (34), in Abhängigkeit von deren Förderkriterien (28), das jedem der Fördergüter (34) zugeordnet ist, gemäß Transportaufträgen (36) durch das Fördernetz (12) zu transportieren, wobei jedem der Fördergüter (34) einer der Transportaufträge (36) zugeordnet ist, mit den Schritten:
Analysieren (S10) der Transportaufträge (36), die in ein Zeitfenster fallen, das eine Vielzahl von aufeinander folgenden Betriebsmodus-Phasen (38) umfasst, nach deren zugeordneten Förderkriterien (28), und Bestimmen einer Verteilung der Förderkriterien (28), die den Transportaufträgen (36) zugeordnet sind, wobei jeder der Transportwege (20) während jeder der Betriebsmodus-Phasen (38) in einem von mehreren verschiedenen Betriebsmodi (26) betreibbar ist, wobei sich die Betriebsmodi (26) durch konstante Transportweg-Geschwindigkeiten (30) voneinander unterscheiden und wobei jedem der Betriebsmodi (26) basierend auf einem der Förderkriterien (28) jeweils eine der Transportweg-Geschwindigkeiten (30) zugeordnet ist;
für jeden Transportauftrag (36):
Auswählen (S12) eines der Transportwege (20) und einer zugehörigen Transportzeit (38) basierend auf dem jeweils zugeordneten Förderkriterium (28), so dass ein Durchsatz durch das Fördernetz (12) optimal ist; und
für jeden Transportweg (20):
für jede Betriebsmodus-Phase (38), die in das Zeitfenster fällt, Auswählen (S14) eines Betriebsmodus (26), der förderkriterien-abhängig eine konstante Transportweg-Geschwindigkeit (30) definiert, basierend auf der Verteilung der Förderkriterien (28), so dass der Durchsatz durch das Fördernetz (10) optimal ist.

12. Verfahren nach Anspruch 11, wobei die Steuerung (14) entsprechende Steuersignale erzeugt, um die Förderstrecken (24) mit entsprechenden Geschwindigkeiten während den jeweiligen Betriebsmodus-Phasen (38) zu betreiben.

## Claims

1. A conveying system (10) including a conveying network (12) and a control device (14) for transporting through the conveying network (12) a plurality of conveying goods (34) in accordance with conveying-good specific transport orders (36) during a time frame,
wherein one of several different conveying criteria (28) and one of the transport orders (36) are allocated to each of the conveying goods (34),
wherein the conveying network (12) comprises an entry station (16), an exit station (18), and several transport paths (20),
wherein each of the transport paths (20) connects the entry station (16) to the exit station (18), wherein each of the transport paths (20) is operable during each operation-mode phase (38) in one of several different operation modes (26), wherein the operation modes (26) distinguish from each other in constant transport-path velocities (30), wherein respectively one of the transport-path velocities (30) is allocated to each of the operation modes (26) based on one of the conveying criteria (28), and wherein the time frame is defined by several subsequent operation-mode phases (38),
wherein the operation modes (26) are selected, by the control (14) device, for each of the transport paths (20) based on the conveying criteria (28), which are allocated to the allocated conveying goods (34), respectively for one of the operation-mode phases (38) such that throughput of the conveying goods (34) through the conveying network (12) is optimized during the time frame.

2. The conveying system of claim 1, wherein one of the transport paths (20) is selected by the control device (14) for each of the conveying goods (34) based on the conveying criteria (28) such that the throughput of the conveying goods (34) through the conveying network (12) is optimized during the time frame.

3. The conveying system of claim 2, wherein the selection of the operation modes (26) for the transport paths (20) on the one hand and the selection of the transport paths (20) for the transport orders (36) on the other hand are independent from each other, and are performed in a throughput-optimized manner.

4. The conveying system (10) of any of claims 1 to 3, wherein each of the transport paths (20) comprises one or more conveying lines (24) being connected to each other, which connect the respective entry station (16) to the associated exit station (18).

5. The conveying system (10) of any of claims 1 to 4, wherein each of the transport orders (36) is defined by:
the conveying criterion (28) being allocated to the respectively allocated conveying good (34);
the time frame;
a spatial starting point;
a spatial arrival point;
one of the operation-mode phases (38), during which transportation of the respectively allocated conveying good (34) starts at the starting point and ends at the arrival point; and
one of the transport paths (20) connecting the starting point to the arrival point.

6. The conveying system of claim 4 and 5, wherein the one transport path (20) only includes conveying lines (24), operation modes (26) of which are allocated to the same conveying criterion (28) as the respective transport order (36) during the associated operation-mode phase (38).

7. The conveying system of any of claims 1 to 6, wherein the conveying network (12) comprises a plurality of entry stations (16) and/or at least a plurality of exit stations (18), wherein each of the entry stations (16) is connectable to at least one exit station via several ones of the transport paths (20).

8. The conveying system of any of claims 1 to 7, wherein the control device (14) optimizes the throughput by determining, by means of the control device (14), a distribution of the conveying criteria (28) over all transport orders (36) which are temporally within the time frame for selecting subsequently the operation modes (26) for each of the transport paths (20) based on the distribution.

9. The conveying system of any of claims 1 to 8, wherein an additional operation mode (26) is provided which is independent from the conveying criteria and comprises a transport-path velocity (30) of zero such that the corresponding transport path (20) is in a resting state.

10. The conveying system of any of claims 1 to 9, wherein the control device (14) takes into account, during optimization, a conveying-line specific maximum capacity in terms of a minimum distance (T) of conveying goods.

11. A method for operating a conveyor system (10) which comprises a conveying network (12) connecting an entry station (16) via several transport paths (20, 24) to an exit station (18), and a control device (14) for transporting conveying goods (34) dependent on conveying criteria (28) thereof, being allocated to each of the conveying goods (34), in accordance with transport orders (36) through the conveying network (12), wherein one of the transport orders (36) is allocated to each of the conveying goods (34), comprising the steps of:
analyzing (S10) the transport orders (36), which are in a time frame including a plurality of subsequent operation-mode phases (38), for conveying criteria (28) allocated thereto, and determining a distribution of the conveying criteria (28) allocated to the transport orders (36), wherein each of the transport paths (20) is operable in one of a plurality of different operation modes (26) during each of the operation-mode phases (38), wherein the operation modes (26) are distinguished from one another by constant transport path velocities (30), and wherein each of the operation modes (26) is allocated to one of the transport-path velocities (30) based on one of the conveying criteria (28);
for each transport order (36):
selecting (S12) one of the transport paths (20) and an associated transport time (38) based on the respectively allocated conveying criterion (28) such that throughput through the conveying network (12) is optimal; and
for each transport path (20):
for each operation-mode phase (38) being within the time frame, selecting (S14) one operation mode (26) which defines a constant transport-path velocity (30) in a conveying-criteria dependent manner based on the distribution of the conveying criteria (28) such that the throughput through the conveying network (10) is optimal.

12. The method of claim 11, wherein the control (14) generates corresponding control signals for operating the conveying lines (24) at corresponding velocities during the respective operation-mode phases (38).

## Revendications

1. Système d'acheminement (10) comportant un réseau d'acheminement (12) et comportant un dispositif de commande (14) pour le transport d'une pluralité de produits à acheminer (34) selon des ordres de transport (36) spécifiques aux produits à acheminer pendant une fenêtre temporelle à travers le réseau d'acheminement (12),
dans lequel chacun des produits à acheminer (34) est associé à un critère d'acheminement parmi plusieurs critères d'acheminement (28) différents et à l'un des ordres de transport (36),
dans lequel le réseau d'acheminement (12) présente une station d'entrée (16), une station de sortie (18) et plusieurs voies de transport (20),
dans lequel chacune des voies de transport (20) relie la station d'entrée (16) à la station de sortie (18), dans lequel chacune des voies de transport (20) peut fonctionner pendant chaque phase de mode de fonctionnement (38) dans un mode de fonctionnement parmi plusieurs modes de fonctionnement (26) différents, dans lequel les modes de fonctionnement (26) se distinguent les uns des autres par des vitesses de voie de transport (30) constantes, dans lequel respectivement une des vitesses de voie de transport (30) est associée à chacun des modes de fonctionnement (26) sur la base de l'un des critères d'acheminement (28) et dans lequel la fenêtre temporelle est définie par plusieurs phases de mode de fonctionnement (38) successives,
dans lequel les modes de fonctionnement (26) pour chacune des voies de transport (20) sont sélectionnés par le dispositif de commande (14) sur la base des critères d'acheminement (28) associés aux produits à acheminer (34) associés, respectivement pour l'une des phases de mode de fonctionnement (38), de sorte qu'un débit des produits à acheminer (34) à travers le réseau d'acheminement (12) est optimisé pendant la fenêtre temporelle.

2. Système d'acheminement selon la revendication 1, dans lequel, pour chacun des produits à acheminer (34), l'une des voies de transport (20) est sélectionnée par le dispositif de commande (14) sur la base des critères d'acheminement (28) de sorte que le débit des produits à acheminer (34) à travers le réseau d'acheminement (12) est optimisé pendant la fenêtre temporelle.

3. Système d'acheminement selon la revendication 2, dans lequel la sélection des modes de fonctionnement (26) pour les voies de transport (20) d'une part et la sélection des voies de transport (20) pour les ordres de transport (36) d'autre part sont interdépendantes et sont effectuées de manière optimisée en termes de débit.

4. Système d'acheminement (10) selon l'une des revendications 1 à 3, dans lequel chacune des voies de transport (20) présente une ou plusieurs lignes d'acheminement (24) reliées entre elles et reliant la station d'entrée (16) respective à la station de sortie (18) correspondante.

5. Système d'acheminement (10) selon l'une des revendications 1 à 4, dans lequel chacun des ordres de transport (36) est défini par :
le critère d'acheminement (28) associé au produit à acheminer (34) respectivement associé ;
la fenêtre temporelle ;
un point de départ local ;
un point d'arrivée local ;
l'une des phases de mode de fonctionnement (38) pendant laquelle un transport du produit à acheminer (34) respectivement associé commence au point de départ et se termine au point d'arrivée ; et
l'une des voies de transport (20) reliant le point de départ au point d'arrivée.

6. Système d'acheminement selon les revendications 4 et 5, dans lequel l'une des voies de transport (20) comprend uniquement des lignes d'acheminement (24) dont les modes de fonctionnement (26) sont associés, pendant la phase de mode de fonctionnement (38) correspondante, au même critère d'acheminement (28) que celui de l'ordre de transport (36) respectif.

7. Système d'acheminement selon l'une des revendications 1 à 6, dans lequel le réseau d'acheminement (12) présente une pluralité de stations d'entrée (16) et/ou présente une pluralité de stations de sortie (18), dans lequel chacune des stations d'entrée (16) peut être reliée à au moins une station de sortie par l'intermédiaire de plusieurs des voies de transport (20).

8. Système d'acheminement selon l'une des revendications 1 à 7, dans lequel le dispositif de commande (14) optimise le débit par le fait que le dispositif de commande (14) détermine une répartition des critères d'acheminement (28) sur tous les ordres de transport (36) situés temporellement dans la fenêtre temporelle afin de sélectionner ensuite les modes de fonctionnement (26) pour chacune des voies de transport (20) sur la base de la répartition.

9. Système d'acheminement selon l'une des revendications 1 à 8, dans lequel un autre mode de fonctionnement (26) indépendant des critères d'acheminement est prévu, lequel présente une vitesse de voie de transport (30) nulle, de sorte que la voie de transport (20) correspondante se trouve dans un état de repos.

10. Système d'acheminement selon l'une des revendications 1 à 9, dans lequel le dispositif de commande (14) prend en compte, lors de l'optimisation, une capacité de charge maximale spécifique aux lignes d'acheminement sous la forme d'une distance minimale (T) entre les produits à acheminer.

11. Procédé permettant de faire fonctionner un système d'acheminement (10) qui présente un réseau d'acheminement (12) reliant une station d'entrée (16) à une station de sortie (18) par l'intermédiaire de plusieurs voies de transport (20, 24), et un dispositif de commande (14) afin de transporter des produits à acheminer (34), en fonction de leurs critères d'acheminement (28), lesquels critères d'acheminement sont associés à chacun des produits à acheminer (34), selon des ordres de transport (36) à travers le réseau d'acheminement (12), dans lequel un des ordres de transport (36) est associé à chacun des produits à acheminer (34), comportant les étapes consistant à :
analyser (S10) les ordres de transport (36) tombant dans une fenêtre temporelle comprenant une pluralité de phases de mode de fonctionnement (38) successives selon leurs critères d'acheminement (28) associés, et déterminer une répartition des critères d'acheminement (28) associés aux ordres de transport (36), dans lequel chacune des voies de transport (20) peut fonctionner dans un mode de fonctionnement parmi plusieurs modes de fonctionnement (26) différents pendant chacune des phases de mode de fonctionnement (38), dans lequel les modes de fonctionnement (26) se distinguent les uns des autres par des vitesses de voie de transport (30) constantes et dans lequel respectivement une des vitesses de voie de transport (30) est associée à chacun des modes de fonctionnement (26) sur la base de l'un des critères d'acheminement (28) ;
pour chaque ordre de transport (36) :
sélectionner (S12) l'une des voies de transport (20) et un temps de transport (38) correspondant sur la base du critère d'acheminement (28) respectivement associé, de sorte qu'un débit à travers le réseau d'acheminement (12) est optimal ; et
pour chaque voie de transport (20) :
pour chaque phase de mode de fonctionnement (38) tombant dans la fenêtre temporelle, sélectionner (S14) un mode de fonctionnement (26) définissant une vitesse de voie de transport (30) constante en fonction des critères d'acheminement, sur la base de la répartition des critères d'acheminement (28), de sorte que le débit à travers le réseau d'acheminement (10) est optimal.

12. Procédé selon la revendication 11, dans lequel le dispositif de commande (14) génère des signaux de commande correspondants pour faire fonctionner les lignes d'acheminement (24) à des vitesses correspondantes pendant les phases de mode de fonctionnement (38) respectives.
